# EUROPÄISCHE PATENTSCHRIFT

(11) **EP 0 424 831 B1**
(45) Veröffentlichungstag und Bekanntmachung des Hinweises auf die Patenterteilung: **01.06.1994**
(21) Anmeldenummer: 90120167.3
(22) Anmeldetag: 20.10.1990
(51) Int. Cl.: B60H 1/00, G05D 23/20

(54) **Verfahren und Einrichtung zur Regelung der Innenraumtemperatur von Kraftfahrzeugen**
Method and device for regulating interior temperature of a motor vehicle
Procédé et dispositif pour réguler la température intérieure d'un habitacle de véhicule automobile

(30) Priorität: 26.10.1989 DE 3935593
(43) Veröffentlichungstag der Anmeldung: 02.05.1991
(73) Patentinhaber: Hella KG Hueck & Co., 59552 Lippstadt (DE)
(72) Erfinder: Knittel, Otto, W-4770 Soest (DE)

(56) Entgegenhaltungen:
- EP-A- 0 300 722
- EP-A- 0 316 077
- DE-A- 3 807 731
- GB-A- 1 522 822
- GB-A- 2 107 487
- US-A- 4 339 076
- US-A- 4 364 429
- US-A- 4 456 166
- PATENT ABSTRACTS OF JAPAN, Band 6, Nr. 193 (M-160)[1071], 2. Oktober 1982;& JP-A-57 99 415 (MITSUBISHI) 21-06-1982
- PATENT ABSTRACTS OF JAPAN, Band 8, Nr. 57 (M-283)[1494], 15. März 1984;& JP-A-58 209 611 (DIESEL KIKI) 06-12-1983
- PATENT ABSTRACTS OF JAPAN, Band 9, Nr. 240 (E-345)[1963], 26. Sepember 1985;& JP-A-60 91 891 (SHIBAURA SEISAKUSHO) 23-05-1985

## Beschreibung

Die Erfindung betrifft ein Verfahren zur Regelung der Innenraumtemperatur von Kraftfahrzeugen nach dem Oberbegriff des Anspruchs 1 und Einrichtungen zur Regelung der Innenraumtemperatur von Kraftfahrzeugen nach dem Oberbegriff des Anspruchs 10.

Aus der europäischen Patentanmeldung EP-A-0 083 048 sind ein Verfahren und eine Einrichtung zur Regelung der Innenraumtemperatur, insbesondere von Kraftfahrzeugen, dieser Art vorbekannt. In dieser Patentanmeldung ist eine Regeleinrichtung für eine Heiz- und/oder Klimaanlage von Kraftfahrzeugen beschrieben, die einen elektrischen Regler aufweist, der zum einen über einen ersten Subtrahierer mit einem Solltemperaturgeber und einem Innenraumtemperaturfühler verbunden ist und zum anderen mit einer Endstufe verbunden ist, die einen Motor laufrichtungsabhängig ansteuert. Der Motor verstellt dabei ein Stellglied zur Beeinflussung der dem Innenraum zugeführten Wärmemenge. Hierbei wird eine Solltemperatur vorgegeben und eine Innenraumtemperatur gemessen. Der erste Subtrahierer bildet aus der Solltemperatur und der Innenraumtemperatur einen ersten Differenzwert, der dem Regler zugeführt wird. Der Regler bildet aus dem ersten Differenzwert einen Regelwert, der der Endstufe zugeführt wird und die in Abhängigkeit von dem Regelwert den Motor getaktet ansteuert. Der Motor verstellt ein Stellglied zur Beeinflussung der dem Innenraum zugeführten Wärmemenge in Abhängigkeit von der vorgegebenen Solltemperatur und der gemessenen Innenraumtemperatur. Zusätzlich wird ein Lagesignal des Stellglieds gemessen und dem Regelkreis mittels eines Lageregelkreises zugeführt. Der Lageregelkreis ist dabei häufig, wie z. B. aus der deutschen Offenlegungsschrift DE-A-35 10 648 bekannt ist, derart ausgebildet, daß ein Potentiometer, das an das Stellglied angekoppelt ist, einen Spannungswert liefert, der von der Lage des Stellglieds abhängt und dem Regler oder dem Regelkreis zugeführt wird, um die Lage des Stellglieds bei der Regelung der Innenraumtemperatur berücksichtigen zu können.

Als nachteilig erweist sich hierbei, daß die Regelung der Innenraumtemperatur für zwei unterschiedliche Raumbereiche getrennt erfolgt, wodurch sich ein erheblicher Mehraufwand an Bauteilen ergibt, der zum einen hohe Kosten erzeugt und zum anderen die Herstellung und die Montage aufwendig macht.

Bei den vorbekannten Regeleinrichtungen und Verfahren erweist sich als besonders nachteilig, daß durch die Verwendung eines Potentiometers zur Bildung eines Lagesignals keine exakte und sichere Bestimmung der Lage des Stellglieds möglich ist, da zum einen die Potentiometer nicht die erforderliche Genauigkeit bei der Messung und Bildung des Lagesignals aufweisen und zum anderen Schaltungen zum Ausgleich der Fehler bei der Messung durch die Potentiometer aufwendig und teuer sind.

In diesem Zusammenhang erweist sich als besonders nachteilig, daß die Herstellbarkeit und die Montierbarkeit einer Einrichtung zur Regelung der Innenraumtemperatur bei der Verwendung eines Potentiometers zur Bestimmung eines Lagesignals nicht kostengünstig ist, da bei der Montage des Potentiometers und des Stellglieds eine aufwendige Justage erforderlich ist, wobei das Potentiometer einen hohen Platzbedarf aufweist.

Zudem erweist sich als nachteilig, daß die Einrichtung zur Regelung der Innenraumtemperatur nur schwer und unter einer aufwendigen Anpassung der Regelung an unterschiedliche Innenräume anpaßbar ist.

Aus der GB-A-2 107 487 ist ein Kontrollsystem für einen Elektromotor bekannt, das bei der Regelung der Innenraumtemperatur eines Kraftfahrzeugs Anwendung findet. Ein von einer Endstufe angesteuerter Gleichstrommotor verstellt ein Stellglied zur Beeinflussung der dem Innenraum zugeführten Wärmemenge. Die Regelung beinhaltet einen Lageregelkreis, wobei ein mit dem Motor mechanisch gekoppeltes Potentiometer das Lagesignal für die Regelung erzeugt. Aufgrund dieses Aufbaus ergeben sich die gleichen oben schon angeführten Nachteile. Zudem weist dieses Kontrollsystem zur Messung des von dem Gleichstrommotor aufgenommenen Motorstroms einen Meßwiderstand zwischen der Endstufe und Masse auf. Als nachteilig erweist sich hierbei, daß diese Meßeinrichtung nur zur Bestimmung der Endlagen des Stellglieds dient, um eine überlastung des Gleichstrommotors bei Erreichen der Endlagen zu vermeiden, und nicht dafür verwendet wird, ein Lagesignal für die Stellung des Stellglieds in Zwischenposition bereitzustellen. Durch die gleichzeitige Verwendung sowohl eines Potentiometers zur Bestimmung des Lagesignals und einer Einrichtung zur Motorstrommessung zur Bestimmung der Endlagen des Stellglieds ergibt sich eine kostenintensive und aufwendige Einrichtung.

Aus der GB-A-1 522 822 ist eine Einrichtung zum Synchronisieren zweier gleichzeitig betriebener Gleichstrommotoren bekannt. Jedem der Motoren ist eine Meßeinrichtung zugeordnet, die in Abhängigkeit von Teilbewegungen des Motors Meßsignale erzeugt, welche einem Pulsformer und einem Zähler zugeführt werden. Entsprechend dem ermittelten Zählerstand der Teilbewegungen der Gleichstrommotoren erfolgt eine Synchronisation der Motorbewegung.

Bei dieser bekannten Einrichtung erweist sich als nachteilig, daß die Messung der Teilbewegungen mit optischen Mitteln oder durch die Verwendung von Hall-Gebern erfolgt, da in unmittelbarer Nähe des Gleichstrommotors Meßeinrichtungen angeordnet werden müssen, die je nach Anbaulage des Gleichstrommotors Verschmutzung und Vibrationen ausgesetzt sind, einen erhöhten konstruktiven und kostenintensiven Aufwand bedingen und über zusätzliche Anschlußleitungen mit der Schaltung verbunden sein müssen.

Der Erfindung liegt daher die Aufgabe zugrunde, ein Verfahren und Einrichtungen zur Regelung der Innenraumtemperatur von Kraftfahrzeugen zu schaffen, die einfach, platzsparend und kostengünstig ist und bei der Verwendung eines Gleichstrommotors zur Verstellung des Stellglieds eine exakte und sichere Bestimmung der Lage des Stellglieds gewährleistet, die einfach und kostengünstig montierbar und herstellbar ist und die ohne aufwendige Justage leicht an unterschiedliche Innenräume anpaßbar ist.

Die Aufgabe wird bei dem erfindungsgemäßen Verfahren durch die Merkmale des Anspruchs 1 gelöst.

Es ist vorteilhaft, daß das Lagesignal durch Messung und Auswertung der Teilbewegungen des Gleichstrommotors um vorgegebene Winkel bei jedem Einschalten und Weiterlaufen des Gleichstrommotors gebildet wird, weil somit auf einfache und kostengünstige Weise bei der Verwendung eines Gleichstrommotors für die Verstellung des Stellglieds die Lage des Stellglieds anhand der von dem Gleichstrommotor durchgeführten vorgegebenen Teilbewegungen exakt und sicher bestimmt werden kann und zudem eine einfache und kostengünstige Montierbarkeit und Herstellbarkeit gewährleistet wird.

Es ist von Vorteil, daß das Lagesignal durch Messung und Auswertung des Motorstroms bei jedem Einschalten und bei jedem Weiterlaufen des Gleichstrommotors gebildet wird, weil sich somit eine besonders einfache und kostengünstige Erfassung der Lage des Stellglieds ergibt, die die Lage des Stellglieds besonders exakt und sicher mißt. Durch die Messung und Auswertung des Motorstroms ergibt sich dabei besonders der Vorteil, daß auf ein Potentiometer verzichtet werden kann, so daß die Regelung ohne eine aufwendige Justage auskommt, einfach und kostengünstig montierbar und herstellbar ist, wenig Platz einnimmt, leicht an unterschiedliche Innenräume anpaßbar ist, wodurch eine einfache, schnelle und stabile Regelung der Innenraumtemperatur des Innenraums gewährleistet wird.

Dadurch, daß die Auswertung erfolgt, indem für jedes Weiterlaufen eines Ankersegments des Gleichstrommotors eine Flankenerkennung des Motorstroms durchgeführt wird, daß für jede Flanke für das Weiterlaufen eines Ankersegments ein Puls gebildet wird, daß die Pulse gezählt und dem Regler zugeführt werden, ergibt sich der Vorteil einer besonders einfachen, kostengünstigen und exakten Bestimmung eines Lagesignals des Stellglieds, wodurch dem Innenraum eine Wärmemenge zugeführt wird, die sicherstellt, daß die Innenraumtemperatur der Solltemperatur entspricht. Dadurch, daß für jedes Weiterlaufen eines Ankersegments des Gleichstrommotors eine Flankenerkennung des Motorstroms durchgeführt wird und daß für jede Flanke für das Weiterlaufen eines Ankersegments ein Puls gebildet wird, ergibt sich der Vorteil, daß bei einem Gleichstrommotor mit mehreren Ankersegmenten jede Teilbewegung des Gleichstrommotors und damit jede Teilverstellung des Stellglieds gemessen wird, ausgewertet wird und dem Regelkreis für eine besonders exakte, schnelle und stabile Regelung der Innenraumtemperatur zugeführt wird.

Es ist von Vorteil, daß die Flankenerkennung durch Differentiation des gemessenen Motorstroms und einer Schwellwerterkennung für eine vorgegebene Flankensteilheit erfolgt, weil somit sichergestellt wird, daß nur solche Flanken im zeitlichen Verlauf des Motorstroms einer Zählung und zur Bildung eines Lagesignals zugeführt werden, die ein Weiterdrehen je eines Ankersegments des Gleichstrommotors darstellen, wodurch sich eine besonders hohe Sicherheit bei der Messung und Bildung des Lagesignals des Stellglieds ergibt.

Dadurch, daß bei überschreiten des Schwellwerts für eine vorgegebene Flankensteilheit ein Monopuls gebildet wird, ergibt sich der Vorteil, daß die zu zählenden Pulse möglichst einfach und kostengünstig gezählt und ausgewertet werden können, wodurch sich eine besonders einfache, kostengünstige und sichere Bildung eines Lagesignals ergibt.

Es ist vorteilhaft, daß das Zählen der Pulse in Abhängigkeit von der Laufrichtung des Gleichstrommotors erfolgt, weil somit jede Laufrichtungsänderung des Gleichstrommotors sicher und zuverlässig bei der Bildung des Lagesignals berücksichtigt wird und somit Fehler bei dem Zählen der Pulse und der Bildung des Lagesignals vermieden werden, so daß Fehleinstellungen des Stellglieds nicht auftreten.

Dadurch, daß mit dem Ende eines jeden Ansteuerpulses von dem Regler an die Endstufe eine Unterdrückung des Nachlaufs des Motors und eine Unterdrückung der Zählung der Pulse erfolgt, ergibt sich der Vorteil, daß die Bewegung, die der Gleichstrommotor ausführen kann, begrenzt wird, so daß der Gleichstrommotor nur die Bewegung ausführt, die für die Regelung der Innenraumtemperatur notwendig ist, und daß die Zählung nur die Pulse erfaßt, die von den Bewegungen des Gleichstrommotors abhängen, die von der Regelung vorgegeben werden, wodurch sich eine hohe Zuverlässigkeit bei der Bildung des Lagesignals ergibt, was zu einer besonders exakten und zuverlässigen Regelung der Innenraumtemperatur führt.

In diesem Zusammenhang ist es besonders vorteilhaft, daß die Unterdrückung des Nachlaufs des Gleichstrommotors erfolgt, indem die Anschlußleitungen des Gleichstrommotors gleichzeitig mit der Masse verbunden werden, wodurch sich ein besonders einfacher und kostengünstiger Verfahrensablauf und Aufbau ergibt und der Nachlauf des Motors sicher vermieden wird.

Es ist von Vorteil, daß dem Regler bei jedem Inbetriebsetzen der Regelung ein Startsignal zugeführt wird, weil somit auf einfache und kostengünstige Weise dem Regler ein Signal zur Verfügung gestellt werden kann, das dazu benutzt werden kann, die Regelung bei jedem Inbetriebsetzen in einen vorbestimmten Anfangszustand zu setzen, wodurch Fehler bei und nach Aufnahme der Regelung vermieden werden können.

Dadurch, daß bei jedem Inbetriebsetzen der Regelung das Stellglied in die Lage verstellt wird, die dem Innenraum eine maximale kalte Wärmemenge zuführt und daß das Stellglied anschließend in die Lage verstellt wird, die das Stellglied bei dem Außerbetriebsetzen eingenommen hat, ergibt sich der Vorteil, daß für die Messung und Auswertung des Motorstroms und damit für die Bildung des Lagesignals jeweils eine definierte Grundstellung des Stellglieds angesteuert wird, wodurch bei jedem Inbetriebsetzen eine Eichung durchgeführt wird, die sicherstellt, daß bei allen nachfolgenden Regelungen das Lagesignal die Lage des Stellglieds eindeutig und zuverlässig wiedergibt.

Zudem wird somit erreicht, daß in der Stellung des Stellglieds, die dem Innenraum möglichst kalte Luft zuführt, eine hohe Dichtheit des Stellglieds gegenüber der Zufuhr erwärmter Luft gewährleistet wird.

Dadurch, daß eine Außentemperatur gemessen wird und daß der erste Differenzwert aus der Solltemperatur, der Innenraumtemperatur und der Außentemperatur gebildet wird, ergibt sich der Vorteil, daß bei der Regelung der Innenraumtemperatur auch die Außentemperatur berücksichtigt wird, wodurch die Regelung schnell und exakt auf Änderungen der Außentemperatur, die sich auf die Innenraumtemperatur auswirken, reagieren kann, was dazu führt, daß die Regelung ohne große Verzögerungen und sehr exakt unter Erhöhung des Komforts erfolgen kann.

Die Aufgabe wird bei der erfindungsgemäßen Einrichtung durch die Merkmale des Anspruchs 10 gelöst.

Es ist vorteilhaft, daß ein an Masse angeschlossener Meßwiderstand zur Messung des Motorstroms zum einen elektrisch leitend mit einer Verbindung zwischen der Endstufe und dem Gleichstrommotor oder mit der Endstufe und zum anderen zur Bildung eines Lagesignals in Abhängigkeit von der Motordrehung elektrisch leitend mit einem Lagesignalbildner verbunden ist und daß der Lagesignalbildner elektrisch leitend mit dem Regler verbunden ist, weil somit auf einfache und kostengünstige Weise ein Lageregelkreis geschaffen wird, der eine exakte und sichere Bestimmung der Lage des Stellglieds gewährleistet, der ohne eine aufwendige Justage einfach und kostengünstig montierbar und herstellbar ist und der leicht, z. B. durch ein Auswechseln des Widerstands, an unterschiedliche Innenräume anpaßbar ist und somit für eine exakte, schnelle und stabile Regelung der Innenraumtemperatur eines Innenraumes sorgt.

Es ist von Vorteil, daß der Lagesignalbildner eine Flankenerkennungseinrichtung, einen Pulsformer und mindestens einen Zähler aufweist und daß der Zähler mit dem Regler verbunden ist, weil somit auf einfache und kostengünstige Weise aus dem gemessenen Motorstrom für jede Flanke des Motorstroms, die den Durchgang eines Ankersegments des Gleichstrommotors darstellt, ein weiter verarbeitbarer Puls zur Bildung eines Lagesignals gebildet wird, wodurch jede Bewegung des Gleichstrommotors und jede Teilbewegung des Gleichstrommotors um je ein Ankersegment für die Lagesignalbildung genutzt werden kann.

Es ist von Vorteil, daß die Flankenerkennungseinrichtung ein Differentialglied oder ein Proportional-Differentialglied aufweist, das eine vorgegebene Grenzfrequenz aufweist, weil somit neben einer einfachen und kostengünstigen Ausführung der Flankenerkennungseinrichtung durch die vorgegebene Grenzfrequenz eine Unterdrückung von Störungen bei der Messung des Motorstroms erreicht wird.

Dadurch, daß der Pulsformer einen Impulsgenerator aufweist oder einen Monopuls erzeugt, ergibt sich der Vorteil, daß jeweils dann, wenn die Flankenerkennungseinrichtung aufgrund der Messung des Motorstroms eine Flanke des Motorstroms erkannt hat, die eine vorgegebene Steilheit aufweist, durch den Pulsformer ein Rechtecksignal gebildet wird, das eine einfache und zuverlässige Weiterverarbeitung ermöglicht.

Es ist vorteilhaft, daß der mindestens eine Zähler ein Aufwärts-Abwärts-Zähler ist, weil sich somit eine besonders kostengünstige und einfache Ausführungsform ergibt und der Zählstand des Zählers direkt an den Regler weitergeleitet werden kann.

Es ist von Vorteil, daß in der Verbindung zwischen dem mindestens einen Zähler und dem Regler ein Digital/Analog-Wandler angeordnet ist, weil auf diese Weise auch einem analog arbeitenden Regler, das durch die Zählung gebildete Lagesignal des Stellglieds ohne großen Bauteileaufwand zur Regelung der Innenraumtemperatur zugeführt werden kann.

Dadurch, daß der mindestens eine Zähler zum einen mit einem ersten Anschluß des Gleichstrommotors in einer ersten Verbindung zwischen der Endstufe und dem Gleichstrommotor und zum anderen mit einem zweiten Anschluß des Gleichstrommotors in einer zweiten Verbindung zwischen der Endstufe und dem Gleichstrommotor verbunden ist, ergibt sich der Vorteil einer hohen Sicherheit und Zuverlässigkeit bei der Zählung der Pulse, da je nach den anstehenden Signalen von dem ersten Anschluß und dem zweiten Anschluß des Gleichstrommotors der Zähler in Abhängigkeit von der Drehrichtung des Gleichstrommotors in einen Zählzustand geschaltet wird, der sicherstellt, daß die für die jeweilige Drehrichtung des Gleichstrommotors gebildeten Pulse von dem Zähler mit dem richtigen Vorzeichen gezählt werden.

Vorteilhaft ist es, daß die Endstufe einen ersten und einen zweiten Komparator aufweist, daß die ersten Eingänge eines jeden Komparators mit einem Versorgungsspannungsanschluß verbunden sind, daß die zweiten Eingänge eines jeden Komparators jeweils mit dem Regler verbunden sind, daß der Ausgang des ersten Komparators elektrisch leitend mit dem ersten Anschluß des Gleichstrommotors verbunden ist und daß der Ausgang des zweiten Komparators elektrisch leitend mit dem zweiten Anschluß des Gleichstrommotors verbunden ist, weil somit eine besonders einfache und kostengünstige, getaktete, laufrichtungsabhängige Ansteuerung des Gleichstrommotors erfolgen kann, die mit einer hohen Sicherheit und Zuverlässigkeit arbeitet.

Dadurch, daß der Regler zum einen elektrisch leitend mit einer ersten Schalteinrichtung, deren Schaltstrecke die Verbindung zwischen dem Ausgang des ersten Komparators und dem ersten Anschluß mit der Masse verbinden kann, und zum anderen elektrisch leitend mit einer zweiten Schalteinrichtung verbunden ist, deren Schaltstrecke die Verbindung zwischen dem ersten Ausgang des zweiten Komparators und dem zweiten Anschluß mit der Masse verbinden kann, ergibt sich der Vorteil, daß auf einfache und kostengünstige Weise ein Nachlaufen des Gleichstrommotors vermieden werden kann, indem je nach gesteuerter Laufrichtung des Gleichstrommotors die erste und/oder die zweite Schalteinrichtung den ersten und/oder zweiten Anschluß des Gleichstrommotors gleichzeitig mit Masse verbinden, so daß z. B. jeweils mit dem Ende eines Ansteuerpulses von dem Regler der Gleichstrommotor zum Stillstand gebracht wird, was dazu führt, daß das Stellglied keine Fehlstellungen einnimmt und zudem ein exaktes Lagesignal gebildet werden kann.

Es ist von Vorteil, daß die erste Schalteinrichtung und die zweite Schalteinrichtung als Transistoren ausgebildet sind, weil sich somit ein besonders einfacher und kostengünstiger Aufbau der Einrichtung ergibt.

Es ist vorteilhaft, daß der Regler mit einer Starterkennungseinrichtung verbunden ist, weil somit auf einfache und kostengünstige Weise dem Regler bei jeder neuen Inbetriebnahme ein Signal zugeführt werden kann, aufgrunddessen die Regelung in einen definierten Anfangszustand versetzt werden kann, der z. B. darin bestehen kann, daß das Stellglied in eine vorbestimmte, definierte Lage verstellt wird, die eine Eichung des Lageregelkreises ermöglicht, wodurch die Sicherheit bei dem Betrieb der Einrichtung und die Zuverlässigkeit und Genauigkeit der Regelung erhöht wird.

Es ist besonders vorteilhaft, daß der Subtrahierer zusätzlich mit einem Außentemperaturfühler verbunden ist, weil somit bei nur einem geringen zusätzlichen Kostenaufwand durch die Berücksichtigung der Außentemperatur bei der Regelung der Innenraumtemperatur eine erhebliche Verbesserung der Regelung und damit des Komforts erreicht wird.

Dadurch, daß in der Verbindung zwischen dem Sollwertgeber und dem Subtrahierer und/oder in der Verbindung zwischen dem Innenraumtemperaturfühler und dem Subtrahierer und/oder in der Verbindung zwischen dem Außentemperaturfühler und dem Subtrahierer je ein Anpaßwiderstand angeordnet ist, ergibt sich der Vorteil, daß die an dem Subtrahierer anstehenden Signale auf einfache und kostengünstige Weise aneinander anpaßbar sind, so daß der Subtrahierer einen Differenzwert bilden kann, der ohne weitere Beeinflussung dem Regler zur Bildung eines Regelwertes zugeführt werden kann.

Es ist von Vorteil, daß der Regler und/oder die Starterkennungseinrichtung und/oder der Zähler und/oder der Pulsformer und/oder die Flankenerkennungseinrichtung und/oder die Anpaßwiderstände und/oder der Digital/Analog-Wandler Teil eines Mikrorechners sind, weil sich somit eine besonders einfache und kostengünstige Ausführungsform der Einrichtung ergibt.

Ausführungsbeispiele der Erfindung sind in den Zeichnungen dargestellt und werden im folgenden anhand der Zeichnungen näher beschrieben.

Es zeigen
Figur 1 ein Blockschaltbild der erfindungsgemäßen Einrichtung,
Figur 2 Diagramme zum Ablauf des erfindungsgemäßen Verfahrens.

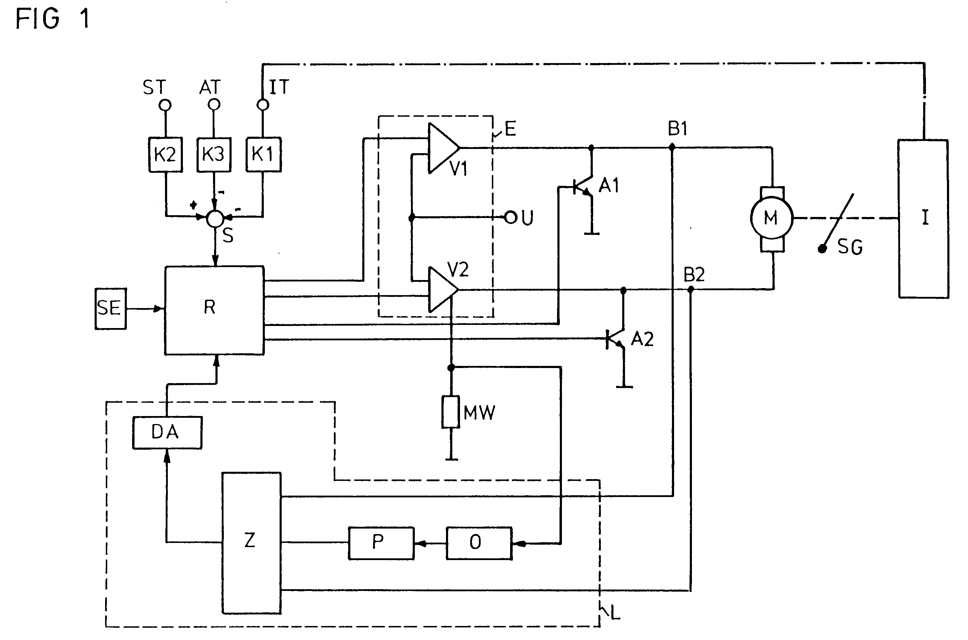

Figur 1 zeigt ein Blockschaltbild der erfindungsgemäßen Einrichtung zur Regelung der Innenraumtemperatur. Um eine Solltemperatur vorgeben zu können, weist die Einrichtung einen Solltemperaturgeber (ST) auf. Zur Messung der Innenraumtemperatur eines Innenraums (I) weist die Einrichtung einen Innenraumtemperaturfühler (IT) auf. Eine strichpunktierte Linie in der Figur 1 weist darauf hin, daß der Innenraumtemperaturfühler (IT) die Innenraumtemperatur des Innenraums (I) mißt. Beispielhaft weist die Einrichtung einen Außentemperaturfühler (AT) auf, der die Außentemperatur mißt. Bei einem einfachen Ausführungsbeispiel kann auf einen Außentemperaturfühler (AT) verzichtet werden. Um eine einfache Verknüpfung der Signale von dem Solltemperaturgeber (ST), dem Außentemperaturfühler (AT) und dem Innenraumtemperaturfühler (IT) zur gewährleisten, sind der Solltemperaturgeber (ST), der Außentemperaturfühler (AT) und der Innenraumtemperaturfühler (IT) mit einem gemeinsamen Subtrahierer (S) verbunden. Beispielhaft wird hier das Signal des Solltemperaturgebers (ST) dem Subtrahierer (S) mit positivem Vorzeichen, das Signal des Außentemperaturfühlers (AT) dem Subtrahierer (S) mit negativem Vorzeichen und das Signal des Innenraumtemperaturfühlers (IT) dem Subtrahierer (S) mit negativem Vorzeichen zugeführt. Damit das von dem Subtrahierer (S) gebildete Differenzsignal keiner weiteren Beeinflussung bedarf und einem elektrischen Regler (R) ohne Veränderung zugeführt werden kann, ist hier, um die an dem Subtrahierer (S) eintreffenden Signale aneinander anpassen zu können, dem Innenraumtemperaturfühler (IT) ein erster Anpaßwiderstand (K1), dem Außentemparaturfühler (AT) ein dritter Anpaßwiderstand (K3) und dem Solltemperaturgeber (ST) ein zweiter Anpaßwiderstand (K2) nachgeschaltet.

Der Regler (R) weist hier beispielhaft zwei Ausgänge auf, die jeder für sich elektrisch leitend mit einer Endstufe (E) zur Ansteuerung eines Gleichstrommotors (M) verbunden sind. Die Endstufe (E) weist hier beispielhaft zwei Komparatoren (V1,V2) auf, deren erste Eingänge jeweils mit einem Versorgungsspannungsanschluß (U) verbunden sind, an dem eine vorbestimmte konstante Spannung anliegt. Die zweiten Eingänge eines jeden Komparators (V1, V2) sind jeder für sich mit einem der beiden Ausgänge des Reglers (R) verbunden. Der Ausgang des ersten Komparators (V1) ist elektrisch leitend mit einem ersten Anschluß (B1) des Gleichstrommotors (M) verbunden. Der Ausgang des zweiten Komparators (V2) ist elektrisch leitend mit dem zweiten Anschluß (B2) des Gleichstrommotors (M) verbunden. Somit ergibt sich eine besonders einfache und kostengünstige, getaktete, drehrichtungsabhängige Ansteuerung des Gleichstrommotors (M).

Wie in der Figur 1 durch eine gestrichelte Linie gekennzeichnet, ist der Gleichstrommotor (M) mit einem Stellglied (SG) verbunden, welches von dem Gleichstrommotor (M) verstellt wird, um dem Innenraum (I) eine Wärmemenge zuzuführen, die gewährleistet, daß die Innenraumtemperatur der vorgegebenen Solltemperatur entspricht. Diese Wirkung ist ebenfalls durch eine gestrichelte Linie in der ersten Figur gekennzeichnet.

Das Stellglied (SG) kann dabei eine Luftklappe zur Beeinflussung der dem Innenraum (I) zugeführten Luftmenge und des Verhältnisses zwischen warmer und kalter Luft sein. Das Stellglied (SG) kann aber auch ein Wasserventil sein, das den Zufluß heißen Wassers zu einem Wärmetauscher in dem Luftstrom zu dem Innenraum (I) verstellt.

Zudem weist die erfindungsgemäße Einrichtung einen Lageregelkreis auf, der hier durch einen Meßwiderstand (MW) und einen Lagesignalbildner (L) gebildet wird. Zur Bildung eines Lagesignals dient hier der von dem Gleichstrommotor (M) aufgenommene Strom. Zur Messung des von dem Gleichstrommotor (M) aufgenommenen Stroms ist ein an Masse angeschlossener Meßwiderstand (MW) zum einen elektrisch leitend mit der Endstufe (E) und zum anderen elektrisch leitend mit dem Lagesignalbildner (L) verbunden, der elektrisch leitend mit dem Regler (R) verbunden ist.

Beispielhaft ist der Meßwiderstand (MW) hier mit dem zweiten Komparator (V2) verbunden. Der Meßwiderstand (MW) kann aber auch elektrisch leitend mit dem ersten Komparator (V1) oder mit einer der Verbindungen zwischen dem Ausgang des ersten Komparators (V1) und dem ersten Anschluß (B1) des Gleichstrommotors (M) oder dem Ausgang des zweiten Komparators (V2) und dem zweiten Anschluß (B2) des Gleichstrommotors (M) verbunden sein. Entscheidend ist dabei lediglich, daß der Meßwiderstand (MW) derart angeordnet ist, daß an ihm eine Spannung abfällt, die dem von dem Gleichstrommotor (M) aufgenommenen Strom entspricht und die dem Lagesignalbildner (L) über die Verbindung zwischen dem Meßwiderstand (MW) und dem Lagesignalbildner (L) zugeführt wird.

Der Lagesignalbildner (L) weist dabei eine Flankenerkennungseinrichtung (O) auf, die über ein Differentialglied oder ein Proportional-Differentialglied verfügt, das eine vorgegebene Grenzfrequenz aufweist, wodurch zum einen das anstehende Signal differenziert wird und bei dem Vorliegen einer vorgegebenen Flankensteilheit des Motorstroms ein Signal erzeugt wird, das an einen Pulsformer (P) weitergegeben wird, und zum anderen durch die vorgegebene Grenzfrequenz eine Unterdrückung von Störeinflüssen des der Flankenerkennungseinrichtung (O) zugeführten Signals gewährleistet wird. Der Gleichstrommotor (M) weist eine vorgegebene Anzahl Ankersegmente auf. Bei jedem Durchgang eines Ankersegments liefert die Flankenerkennungseinrichtung (O) an den Pulsformer (P) ein Signal, so daß die Bewegung des Gleichstrommotors (M) umso genauer erfaßt werden kann, je mehr Ankersegmente der Gleichstrommotor (M) aufweist.

Der Pulsformer (P) kann beispielsweise als ein Impulsgenerator ausgebildet sein, der bei einem von der Flankenerkennungseinrichtung (O) anstehenden Signal jeweils einen Monopuls, d. h. einen Rechteckpuls, bildet. Jeder dieser Rechteckpulse wird einem Zähler (Z) zugeführt, der mit dem Pulsformer (P) verbunden ist.

Damit der hier beispielhaft als ein Aufwärts-Abwärts-Zähler ausgebildete Zähler (Z) die gebildeten Pulse für die jeweils wirksame Drehrichtung des Gleichstrommotors (M) mit einem richtigen Vorzeichen zählt, ist der Zähler (Z) zum einen elektrisch leitend mit dem ersten Anschluß (B1) des Gleichstrommotors (M) und zum anderen elektrisch leitend mit dem zweiten Anschluß (B2) des Gleichstrommotors (M) verbunden. Je nachdem in welcher Drehrichtung der Gleichstrommotor (M) angesteuert wird, wird dem Zähler (Z) von dem ersten Anschluß (B1) oder dem zweiten Anschluß (B2) ein Signal zugeführt, das den Zähler (Z) in einen Zählzustand schaltet, der sicherstellt, daß die einlaufenden Pulse entsprechend der Lageverstellung des Stellgliedes (SG) mit dem richtigen Vorzeichen gezählt werden.

Bei einem anderen Ausführungsbeispiel kann die Einrichtung auch über zwei Zähler (Z) verfügen, wobei jeder der Zähler entsprechend durch die Ansteuerung von dem ersten Anschluß (B1) und dem zweiten Anschluß (B2) jeweils nur Pulse zählt, die einer Drehrichtung des Gleichstrommotors (M) zugehören. Zur Bildung eines Lagesignals können die Signale von den Zählern (Z) einem weiteren Subtrahierer zugeführt werden.

Ist der Regler (R) ein digitaler Regler, so kann bei dem in Figur 1 gezeigten Ausführungsbeispiel das Signal von dem Zähler (Z), das das Lagesignal darstellt, direkt dem Regler (R) zugeführt werden. Ist der Regler (R) als ein analoger Regler ausgebildet, so ist zur Wandlung des digitalen Signals von dem Zähler (Z) in ein analoges Signal in der Verbindung zwischen dem Zähler (Z) und dem analogen Regler (R) ein Digital/Analog-Wandler (DA) angeordnet.

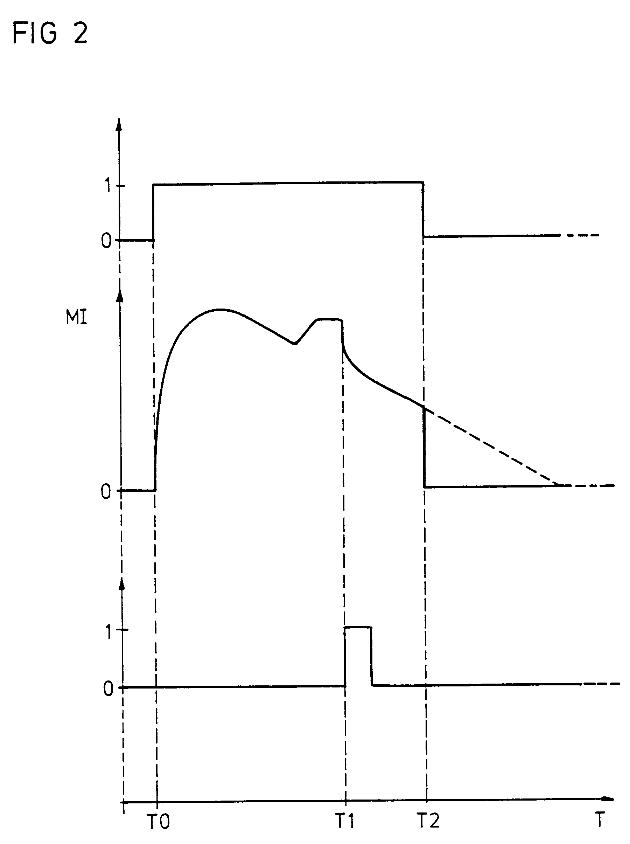

Um ein Nachlaufen des Gleichsstrommotors (M) nach dem Abschalten der Ansteuerung durch die Endstufe (E) zu verhindern, weist die erfindungsgemäße Einrichtung eine erste und eine zweite Schalteinrichtung (A1, A2) auf. Zu diesem Zweck ist der Regler zum einen elektrisch leitend mit der ersten Schalteinrichtung (A1) über einen weiteren Ausgang verbunden, deren Schaltstrecke die Verbindung zwischen dem Ausgang des ersten Komparators (V1) und dem ersten Anschluß (B1) mit der Masse verbinden kann, wenn an dem weiteren Ausgang des Reglers (R) ein entsprechendes Signal ansteht und ist der Regler (R) zum anderen über einen zusätzlichen Ausgang elektrisch leitend mit der zweiten Schalteinrichtung (A2) verbunden, deren Schaltstrecke die Verbindung zwischen dem Ausgang des zweiten Komparators (V2) und dem zweiten Anschluß (B2) mit der Masse verbinden kann, wenn an dem zusätzlichen Ausgang des Reglers (R) ein entsprechendes Signal anliegt. Bei dem in Figur 2 gezeigten Ausführungsbeispiel sind die beiden weiteren Ausgänge des Reglers (R) jeweils mit der Basis eines ersten und zweiten Transistors (A1, A2) verbunden. Es sind aber auch alle anderen Schalteinrichtungen verwendbar.

Damit der Regler (R) eine Inbetriebnahme der Regelung erkennt, ist der Regler (R) elektrisch leitend mit einer Starterkennungseinrichtung (SE) verbunden. Zum Beispiel bei dem Einschalten der Versorgungsspannung für den Regler (R) liefert die Starterkennungseinrichtung (SE) dem Regler (R) ein Signal, aufgrunddessen der Regler (R) vorgegebene Schaltoperationen durchführt.

Eine besonders einfache und kostengünstige Ausführung der erfindungsgemäßen Einrichtung ergibt sich, wenn der Regler (R) und/oder die Starterkennungseinrichtung (SE) und/oder der Mittelwertbildner (MB) und/oder der Zähler (Z) und/oder der Digital/Analog-Wandler (DA) und/oder der Pulsformer (P) und/oder die Flankenerkennungseinrichtung (O) und/oder die Anpaßwiderstände (K1, K2, K3) Teil eines Mikrorechners sind, der weitere Steuer- und Regelfunktionen übernehmen kann.

Im folgenden wird unter Zuhilfenahme von Figur 1 das erfindungsgemäße Verfahren zur Regelung der Innenraumtemperatur näher beschrieben.

Bei einer Inbetriebnahme der Regelung der Innenraumtemperatur, das heißt, bei einem Einschalten der Versorgungsspannung, wird der Regler (R) von der Starterkennungseinrichtung (SE) mit einem Signal beaufschlagt, das den Regler (R) in einen vorbestimmten, definierten Anfangszustand versetzt. Aus einer vorgegebenen Solltemperatur und einer gemessenen Innenraumtemperatur wird von dem Subtrahierer (S) ein Differenzwert gebildet, der dem Regler (R) zugeführt wird. In Abhängigkeit von diesem Differenzwert bildet der Regler (R) einen Regelwert, der die Endstufe (E) ansteuert.

Zur Verbesserung des Regelverhaltens kann dabei der Subtrahierer (S) zusätzlich mit einem Außentemperaturfühler (AT) verbunden sein, so daß die Außentemperatur bei der Regelung berücksichtigt wird. Das Signal von dem Solltemperaturgeber (ST) wird hier beispielhaft mit positivem Vorzeichen dem Subtrahierer (S) zugeführt. Die Signale von dem Außentemperaturfühler (AT) und dem Innenraumtemperaturfühler (IT) werden hier beispielhaft mit negativem Vorzeichen dem Subtrahierer (S) zugeführt. Bei einem anderen Ausführungsbeispiel können die Signale von dem Solltemperaturgeber (ST), von dem Außentemperaturfühler (AT) und dem Innenraumtemperaturfühler (IT) auch mit anderen Vorzeichen dem Subtrahierer (S) zugeführt werden.

Der von dem Regler (R) gebildete Regelwert, der z. B. ein Taktsignal sein kann, wird einer Endstufe (E) zur Ansteuerung eines Gleichstrommotors (M( zugeführt. Der Gleichstrommotor (M) ist dabei mit einem Stellglied (SG) verbunden, das die dem Innenraum (I) zugeführte Wärmemenge beeinflußt.

Zur drehrichtungsabhängigen Ansteuerung des Gleichstrommotors (M) steuert der Regler (R) die Endstufe (E) entweder über einen ersten oder aber über einen zweiten Ausgang an. Wird dem Regler (R) dabei von dem Subtrahierer (S) ein erster Differenzwert zugeführt, der es erforderlich macht, das Stellglied (SG) zu verstellen, um dem Innenraum (I) wärmere oder kältere Luft zuzuführen, so bildet der Regler (R) einen Regelwert, der in Form von Ansteuerpulsen je nach der erforderlichen Drehrichtung des Gleichstrommotors (M) über den ersten Ausgang oder den zweiten Ausgang des Reglers (R) der Endstufe (E) zugeführt wird.

Die Endstufe (E) bildet aus den Ansteuerpulsen von dem Regler (R) verstärkte Taktsignale, die den Gleichstrommotor (M) ansteuern. Die Endstufe (E) weist hier beispielhaft zwei Komparatoren (V1, V2) auf, deren zweite Eingänge jeweils mit dem Regler (R) und deren erste Eingänge jeweils mit einem Versorgungsspannungsanschluß (U) verbunden sind. Wird der erste Komparator (V1) von dem Regler (R) angesteuert, so bildet dieser an seinem Ausgang Taktsignale, die den Gleichstrommotor (M) über einen ersten Anschluß (B1) ansteuern. Während dieser Ansteuerung des Gleichstrommotors (M) in einer ersten Drehrichtung ist ein zweiter Anschluß (B2) des Gleichstrommotors (M) in der Verbindung mit dem zweiten Komparator (V2) mit der Masse verbunden. Ist es erforderlich, den Gleichstrommotor (M) in einer zweiten Drehrichtung zu betreiben, so wird der zweite Komparator (V2) der Endstufe (E) von dem Regler (R) angesteuert, so daß dieser ein verstärktes Taktsignal bildet, das den Gleichstrommotor (M) über den zweiten Anschluß (B2) ansteuert. In diesem Fall ist der erste Anschluß (B1) des Gleichstrommotors (M) mit der Masse verbunden.

Zur Bildung eines Lagesignals des Stellglieds (SG) ist ein Lageregelkreis vorhanden, der den von dem Gleichstrommotor (M) aufgenommenen Strom mißt, auswertet und das so gebildete Lagesignal dem Regler (R) für eine exakte und sichere Regelung der dem Innenraum (I) zugeführten Wärmemenge zuführt.

Figur 2 zeigt drei Diagramme, die den Teilablauf des Verfahrens zur Messung und Auswertung des Motorstroms, durch das ein Lagesignal gebildet wird, verdeutlichen. Die drei Diagramme weisen eine gemeinsame Abszissenachse auf, die eine Zeitachse (T) ist.

Das oberste Diagramm zeigt den zeitlichen Verlauf eines Ansteuerpulses für den Gleichstrommotor (M), der bewirkt, daß der Gleichstrommotor (M) sich genau um ein Ankersegment weiterbewegt. Zu diesem Zweck wird ein Rechteckpuls gebildet, indem zu einem Zeitpunkt (T0) die Spannung an einem der Ausgänge der beiden Komparatoren (V1, V2) von einem Wert 0 auf einen Wert 1 angehoben wird und zu einem Zeitpunkt (T2) von dem Wert 1 auf den Wert 0 geschaltet wird.

Das mittlere Diagramm in Figur 2 zeigt den zeitlichen Verlauf des Motorstroms (MI) für den Zeitraum eines Ansteuerpulses. Durch jeden, in dem oberen Diagramm in Figur 2 gezeigten Ansteuerpuls wird der Gleichstrommotor (M) aus dem Stillstand in Bewegung gesetzt. Zur Zeit (T0) ist der Motorstrom (MI) gleich Null. Mit dem Auftreten des Ansteuerpulses, der den Gleichstrommotor (M) in Bewegung setzt, steigt der Motorstrom (MI) stark an, um dann einen Wendepunkt zu erreichen und nach dem hohen Anlaufstrom wieder leicht und mit einer fast konstanten, negativen Steigung abzufallen. Innerhalb dieses Abfalls des Motorstroms (MI) treten weitere Unstetigkeiten auf, die zum einen in einem leichten Anstieg des Motorstroms (MI), einem darauffolgenden, kurzzeitigen Plateau und zu einer Zeit (T1) in einem starken, steilen Abfall des Motorstroms (MI) bestehen. Diese steile Flanke, nach der der Motorstrom (MI) wieder beinahe konstant abnimmt, kann zur Erkennung des Weiterdrehens um je ein Ankersegment des Gleichstrommotors (M) ausgewertet werden.

Die Erkennung und Auswertung dieser steilen Flanke des Motorstroms (MI) zur Zeit (T1) erfolgt, indem der Motorstrom (MI) über einen Meßwiderstand (MW) gemessen wird. Der mit Masse verbundene Meßwiderstand (MW) ist hier zum einen elektrisch leitend mit dem Lagesignalbildner (L) verbunden und zum anderen hier beispielhaft mit dem zweiten Komparator (V2) der Endstufe (E) verbunden. Der Meßwiderstand (MW) kann dabei z. B. als ein niederohmiger Widerstand ausgebildet sein. Bei einem anderen Ausführungsbeispiel kann der Meßwiderstand (MW) auch mit dem ersten Komparator (V1) verbunden sein oder aber mit der Verbindung zwischen dem Ausgang des ersten Komparators (V1) und dem ersten Anschluß (B1) des Gleichstrommotors (M) oder aber mit der Verbindung zwischen dem Ausgang des zweiten Komparators (V2) und dem zweiten Anschluß (B2) des Gleichstrommotors (M). Der Meßwiderstand (MW) ist dabei jeweils so angeordnet, daß dem Lagesignalbildner (L) ein Spannungssignal zugeführt wird, das dem von dem Gleichstrommotor (M) aufgenommenen Motorstrom (MI) proportional ist.

Dieses Signal wird einer Flankenerkennungseinrichtung (O) zugeführt, die ein Differentialglied oder ein Proportional-Differentialglied zur Differentiation des gemessenen Motorstroms (MI) aufweist und die bei dem Vorliegen eines vorgegebenen Schwellwertes für eine vorgegebene Flankensteilheit des Motorstroms (MI) ein Ausgangssignal bildet, das für die Bildung eines Lagesignals ausgewertet werden kann.

Dieses Ausgangssignal in Abhängigkeit von der Flanke des Motorstroms (MI) zu der Zeit (T1) wird einem Pulsformer (P) zugeführt, der einen Monopuls und hier beispielhaft einen Rechteckpuls mit einer vorgegebenen Pulsbreite erzeugt, die sicherstellt, daß jede Flanke, die das Weiterdrehen des Gleichstrommotors (M) um je ein Ankersegment darstellt, sicher und zuverlässig ausgewertet werden kann. Das unterste Diagramm in Figur 2 zeigt beispielhaft einen solchen Puls, der zu der Zeit (T1) gebildet wird und eine vorgegebene Pulsbreite aufweist, die eine zuverlässige, sichere Zählung ermöglicht.

Je mehr Ankersegmente der Motor (M) aufweist, umso feiner und zuverlässiger kann die Bewegung des Motors (M) und damit die Verstellbewegung des Stellglieds (SG) registriert und ausgewertet werden. Die weitere Auswertung erfolgt hier beispielhaft in der Form, daß die von dem Pulsformer (P) gebildeten Pulse einem Zähler (Z) zugeführt werden.

Der Zähler (Z), der hier beispielhaft als ein Aufwärts-Abwärts-Zähler ausgebildet ist, zählt in Abhängigkeit von den Signalen von dem ersten Anschluß (B1) und dem zweiten Anschluß (B2) die Pulse in Abhängigkeit von der jeweils vorliegenden Drehrichtung des Gleichstrommotors (M). Der so gebildete Zählstand der dem Lagesignal des Stellglieds (SG) entspricht, wird als digitales Signal dem Regler (R) zugeführt. Ist der Regler (R) ein analoger Regler, so wird das digitale Signal von dem Zähler (Z) dem Regler (R) über einen Digital/Analog-Wandler (DA) zugeführt.

Damit der Gleichstrommotor (M) bei jeder Ansteuerung durch den Regler (R) sich immer nur um einen vorgegebenen Betrag bewegt, wird der natürliche Nachlauf des Gleichstrommotors (M) unterdrückt, indem angesteuert von dem Regler (R) eine erste Schalteinrichtung (A1) die Verbindung zwischen der Endstufe (E) und dem ersten Anschluß (B1) mit der Masse verbindet und eine zweite Schalteinrichtung (A2) die Verbindung zwischen der Endstufe (E) und dem zweiten Anschluß (B2) mit der Masse verbindet. Wie aus Figur 2 erkennbar ist, wird damit mit jedem Ende des Ansteuerpulses zu dem Zeitpunkt (T2) diejenige Verbindung zwischen der Endstufe (E) und dem Gleichstrommotor (M) über eine der Schalteinrichtungen (A1, A2) mit der Masse verbunden, die zu diesem Zeitpunkt den Gleichstrommotor (M) ansteuert, so daß ein Wicklungskurzschluß auftritt und, wie aus dem mittleren Diagramm in Figur 2 ersichtlich ist, der Gleichstrommotor (M) stehen bleibt. Aus diesem Diagramm ist erkennbar, daß der Motorstrom (MI) zu dem Zeitpunkt (T2) auf den Wert (0) abfällt und ein Nachlauf des Gleichstrommotors (M), wie er durch die gestrichelte Linie in dem mittleren Diagramm der Figur 2 erkennbar ist, nicht erfolgt. Dadurch, daß der Zähler (Z) mit dem ersten Anschluß (B1) und mit dem zweiten Anschluß (B2) des Gleichstrommotors (M) verbunden ist, wird vermieden, daß diese auftretende Flanke in dem Motorstrom (MI) zu der Zeit (T2) in der Form ausgewertet wird, daß ein Puls gebildet wird, der die Bewegung des Gleichstrommotors (M) kennzeichnet, indem der Zähler (Z) für eine Zählung gesperrt wird. Es ergibt sich somit eine hohe Zuverlässigkeit und Sicherheit bei der Zählung der Bewegungsvorgänge des Gleichstrommotors (M).

Damit bei jeder Inbetriebnahme der Regelung die Lage des Stellglieds (SG) sicher und zuverlässig ermittelt werden kann, wird dem Regler (R) bei jeder Inbetriebnahme der Regelung von der Starterkennungseinrichtung (SE) ein Signal zugeführt, woraufhin der Regler (R) den Gleichstrommotor (M) derart ansteuert, daß das Stellglied (SG) in eine Lage verstellt wird, die eine maximale kalte Wärmemenge dem Innenraum zuführt, so daß in dieser Lage des Stellglieds (SG) der Zählstand des Zählers (Z) auf einen vorgegebenen Zählstand gesetzt werden kann.

Bei der Ansteuerung des Gleichstrommotors (M), durch die das Stellglied (SG) in die Lage verstellt wird, die dem Innenraum eine maximale kalte Wärmemenge zuführt, wird dabei eine Zählung der Pulse vorgenommen, um sicherzustellen, daß die vorgegebene Lage des Stellglieds (SG) auch wirklich erreicht wird, die gewährleistet, daß in dieser Lage des Stellglieds (SG) keine warme Luft in den Innenraum des Kraftfahrzeugs gelangt, wird das Stellglied (SG) über den Gleichstrommotor (M) noch durch einige Ansteuerpulse in Richtung kalt angesteuert. Nach diesem Vorgang wird das Stellglied (SG) durch den Gleichstrommotor (M) in die Lage verstellt, die das Stellglied (SG) bei dem letzten Außerbetriebsetzen der Regelung eingenommen hat. Bei einer nur kurzzeitigen Unterbrechung der Regelung ergibt sich dabei der Vorteil einer Komforterhöhung, da bei kurzzeitigen Unterbrechungen des Betriebs des Kraftfahrzeugs nur geringe Änderungen in der Außentemperatur und in der Innenraumtemperatur zu erwarten sind und somit dem Innenraum bei einem erneuten Inbetriebsetzen des Kraftfahrzeugs eine Wärmemenge zugeführt wird, die nur geringfügig von der Wärmemenge abweichen kann, die erforderlich ist, um den Innenraum des Kraftfahrzeuges auf eine gewünschte Temperatur zu erwärmen. Als vorteilhaft erweist es sich dabei, wenn das Stellglied (SG) möglichst schnell in die Lage verstellt wird, die dem Innenraum eine maximale kalte Wärmemenge zuführt und danach möglichst schnell in die Lage verstellt wird, die das Stellglied (SG) bei dem Außerbetriebsetzen des Kraftfahrzeugs eingenommen hat, weil somit vermieden wird, daß dem Innenraum eine größere komfortmindernde kalte Wärmemenge zugeführt wird. Nach dem Ansteuern dieser Lage des Stellglieds (SG) erfolgt die Regelung in Abhängigkeit von dem gebildeten Differenzwert.

## Patentansprüche

1. Verfahren zur Regelung der Innenraumtemperatur von Kraftfahrzeugen, bei dem eine Solltemperatur vorgegeben wird und eine Innenraumtemperatur gemessen wird, bei dem ein Differenzwert aus der Solltemperatur und der Innenraumtemperatur gebildet wird, der einem Regler (R) zugeführt wird, bei dem der Regler (R) aus dem Differenzwert einen Regelwert bildet, der einer Endstufe (E) zur getakteten, drehrichtungsabhängigen Ansteuerung eines Gleichstrommotors (M) zugeführt wird, wobei der Gleichstrommotor (M) ein Stellglied (SG) zur Beeinflussung der dem Innenraum (I) zugeführten Wärmemenge verstellt und bei dem ein Lagesignal des Stellglieds (SG) gemessen und dem Regelkreis zugeführt wird, dadurch gekennzeichnet, daß das Lagesignal durch Messung und Auswertung der Teilbewegungen des Gleichstrommotors (M) um vorgegebene Winkel bei jedem Einschalten und Weiterlaufen des Gleichstrommotors (M) gebildet wird, daß das Lagesignal durch Messung und Auswertung des Motorstroms bei jedem Einschalten und bei jedem Weiterlaufen des Gleichstrommotors (M) gebildet wird, daß die Auswertung erfolgt, indem für jedes Weiterlaufen eines Ankersegments des Gleichtrommotors (M) eine Flankenerkennung des Motorstroms durchgeführt wird, daß für jede Flanke für das Weiterlaufen eines Ankersegments ein Puls gebildet wird und daß die Pulse gezählt und dem Regler (R) zugeführt werden.

2. Verfahren nach Anspruch 1, dadurch gekennzeichnet, daß die Flankenerkennung durch Differentiation des gemessenen Motorstroms und einer Schwellwerterkennung für eine vorgegebene Flankensteilheit erfolgt.

3. Verfahren nach Anspruch 2, dadurch gekennzeichnet, daß bei überschreiten des Schwellwerts für eine vorgegebene Flankensteilheit ein Monopuls gebildet wird.

4. Verfahren nach Anspruch 3, dadurch gekennzeichnet, daß das Zählen der Pulse in Abhängigkeit der Laufrichtung des Gleichstrommotors (M) erfolgt.

5. Verfahren nach Anspruch 4, dadurch gekennzeichnet, daß mit dem Ende eines jeden Ansteuerpulses von dem Regler (R) an die Endstufe (E) eine Unterdrückung des Nachlaufs des Gleichstrommotors (M) und eine Unterdrückung der Zählung der Pulse erfolgt.

6. Verfahren nach Anspruch 5, dadurch gekennzeichnet, daß die Unterdrückung des Nachlaufs des Gleichstrommotors (M) erfolgt, indem die Anschlußleitungen des Gleichstrommotors (M) gleichzeitig mit der Masse verbunden werden.

7. Verfahren nach Anspruch 6, dadurch gekennzeichnet, daß dem Regler (R) bei jedem Inbetriebsetzen der Regelung ein Startsignal zugeführt wird.

8. Verfahren nach Anspruch 7, dadurch gekennzeichnet, daß bei jedem Inbetriebsetzen der Regelung das Stellglied (SG) in die Lage verstellt wird, die dem Innenraum (I) eine maximale kalte Wärmemenge zuführt und daß das Stellglied (SG) anschließend in die Lage verstellt wird, die das Stellglied (SG) bei dem Außerbetriebsetzen eingenommen hat.

9. Verfahren nach mindestens einem der vorstehenden Ansprüche, dadurch gekennzeichnet, daß eine Außentemperatur gemessen wird und daß der erste Differenzwert aus der Solltemperatur der Innenraumtemperatur und der Außentemperatur gebildet wird.

10. Einrichtung zur Regelung der Innenraumtemperatur von Kraftfahrzeugen, mit einem elektrischen Regler (R), der zum einen über einen Subtrahierer (S) mit einem Solltemperaturgeber (ST) und einem Innenraumtemperaturfühler (IT) verbunden ist, und zum anderen mit einer Endstufe (E) verbunden ist, mit einem Gleichstrommotor (M), der zum einen mit der Endstufe (E) verbunden ist und zum anderen ein Stellglied (SG) zur Beeinflussung der dem Innenraum (I) zugeführten Wärmemenge verstellt, und mit einem Lageregelkreis, dadurch gekennzeichnet, daß ein an Masse angeschlossener Meßwiderstand (MW) zur Messung des Motorstroms zum einen elektrisch leitend mit einer Verbindung zwischen der Endstufe (E) und dem Gleichstrommotor (M) oder mit der Endstufe (E) und zum anderen zur Bildung eines Lagesignals in Abhängigkeit von der Motordrehung elektrisch leitend mit einem Lagesignalbildner (L) verbunden ist und daß der Lagesignalbildner (L) elektrisch leitend mit dem Regler (R) verbunden ist, daß der Lagesignalbildner (L), um aus dem gemessenen Motorstrom für jedes Weiterlaufen eines Ankersegments des Gleichstrommotors (M) einen zählbaren Puls zu bilden, eine Flankenerkennungseinrichtung (O), einen Pulsformer (P) und mindestens einen Zähler (Z) aufweist und daß der Zähler (Z) mit dem Regler (R) verbunden ist.

11. Einrichtung nach Anspruch 10, dadurch gekennzeichnet, daß die Flankenerkennungseinrichtung (O) ein Differentialglied oder ein Proportional-Differentialglied aufweist, das eine vorgegebene Grenzfrequenz aufweist.

12. Einrichtung nach Anspruch 10 oder Anspruch 11, dadurch gekennzeichnet, daß der Pulsformer (P) einen Impulsgenerator aufweist, der einen Monopuls erzeugt.

13. Einrichtung nach Anspruch 12, dadurch gekennzeichnet, daß der mindestens eine Zähler (Z) ein Aufwärts-Abwärts-Zähler ist.

14. Einrichtung nach Anspruch 13, dadurch gekennzeichnet, daß in der Verbindung zwischen dem mindestens einen Zähler (Z) und dem Regler (R) ein Digital/Analog-Wandler (DA) angeordnet ist.

15. Einrichtung nach Anspruch 14, dadurch gekennzeichnet, daß der mindestens eine Zähler (Z) zum einen mit einem ersten Anschluß (B1) des Gleichstrommotors (M) in einer ersten Verbindung zwischen der Endstufe (E) und dem Gleichstrommotor (M) und zum anderen mit einem zweiten Anschluß (B2) des Gleichstrommotors (M) in einer zweiten Verbindung zwischen der Endstufe (E) und dem Gleichstrommotor (M) verbunden ist.

16. Einrichtung nach Anspruch 15, dadurch gekennzeichnet, daß die Endstufe (E) einen ersten und einen zweiten Komparator (V1, V2) aufweist, daß die ersten Eingänge eines jeden Komparators (V1, V2) mit einem Versorgungsspannungsanschluß (U) verbunden sind, daß die zweiten Eingänge eines jeden Komparators (V1, V2) jeweils mit dem Regler (R) verbunden sind, daß der Ausgang des ersten Komparators (V1) elektrisch leitend mit dem ersten Anschluß (B1) des Gleichstrommotors (M) verbunden ist und daß der Ausgang des zweiten Komparators (V2) elektrisch leitend mit dem zweiten Anschluß (B2) des Gleichstrommotors (M) verbunden ist.

17. Einrichtung nach Anspruch 16, dadurch gekennzeichnet, daß der Regler (R) zum einen elektrisch leitend mit einer ersten Schalteinrichtung (A1), deren Schaltstrecke die Verbindung zwischen dem Ausgang des ersten Komparators (V1) und dem ersten Anschluß (B1) mit der Masse verbinden kann, und zum anderen elektrisch leitend mit einer zweiten Schalteinrichtung (A2) verbunden ist, deren Schaltstrecke die Verbindung zwischen dem Ausgang des zweiten Komparators (V2) und dem zweiten Anschluß (B2) mit der Masse verbinden kann.

18. Einrichtung nach Anspruch 17, dadurch gekennzeichnet, daß die erste Schalteinrichtung (A1) und die zweite Schalteinrichtung (A2) als Transistoren ausgebildet sind.

19. Einrichtung nach Anspruch 18, dadurch gekennzeichnet, daß der Regler (R) mit einer Starterkennungseinrichtung (SE) verbunden ist.

20. Einrichtung nach mindestens einem der vorstehenden Ansprüche, dadurch gekennzeichnet, daß der Subtrahierer (S) zusätzlich mit einem Außentemperaturfühler (AT) verbunden ist.

21. Einrichtung nach Anspruch 20, dadurch gekennzeichnet, daß in der Verbindung zwischen dem Sollwertgeber (ST) und dem Subtrahierer (S) und/oder in der Verbindung zwischen dem Innenraumtemperaturfühler (IT) und dem Subtrahierer (S) und/oder in der Verbindung zwischen dem Außentemperaturfühler (AT) und dem Subtrahierer (S) je ein Anpaßwiderstand (K1, K2, K3) angeordnet ist.

22. Einrichtung nach mindestens einem der vorstehenden Ansprüche, dadurch gekennzeichnet, daß der Regler (R) und/oder die Starterkennungseinrichtung (SE) und/oder der Zähler (Z) und/oder der Pulsformer (P) und/oder die Flankenerkennungseinrichtung (O) und/oder die Anpaßwiderstände (K1, K2, K3) und/oder der Digital/Analog-Wandler (DA) Teil eines Mikrorechners sind.

## Claims

1. Process for controlling the temperature of motor vehicle interiors, whereby a nominal temperature is preset and an interior temperature measured, and the nominal temperature and the interior temperature are used to generate a differential which is sent to a controller (R), whereby the controller (R) uses the differential to generate a control value which is sent to an output stage (E) for unidirectional triggering of a d.c. motor (M) in a timed cycle, the d.c. motor (M) adjusting a final controlling element (SG) so as to influence the amount of heat supplied to the interior (I) and whereby a position signal from the final controlling element (SG) is measured and sent to the closed control loop, characterised in that the position signal is generated by measuring and evaluating the indexing movements of the d.c. motor (M) through preset angles each time the d.c. motor (M) is switched on and advances, that the position signal is generated by measuring and evaluating the motor current each time the d.c. motor (M) is switched on and each time it advances, that said evaluation involves carrying out motor current edge recognition each time an armature segment of the d.c. motor (M) advances, that a pulse is generated for each edge in respect of the advance of an armature segment, and that the pulses are counted and sent to the controller (R).

2. Process according to claim 1, characterised in that edge recognition is carried out by differentiation of the measured motor current and a threshold recognition procedure for a preset rate of change.

3. Process according to claim 2, characterised in that a monopulse is generated if the threshold is exceeded in respect of a preset rate of change.

4. Process according to claim 3, characterised in that the pulses are counted in dependence on the direction of rotation of the d.c. motor (M).

5. Process according to claim 4, characterised in that at the end of every trigger pulse from the controller (R) to the output stage (E), the slowing-down of the d.c. motor (M) is suppressed and counting of the pulses is suppressed.

6. Process according to claim 5, characterised in that the slowing-down of the d.c. motor (M) is suppressed by linking the connecting leads of the d.c. motor (M) simultaneously to frame.

7. Process according to claim 6, characterised in that a start signal is sent to the controller (R) each time the control procedure is started up.

8. Process according to claim 7, characterised in that each time the control procedure is started up, the final controlling element (SG) is moved to the setting that produces a maximum cooling action on the interior (I), and that the final controlling element (SG) is then moved to the setting assumed by the final controlling element (SG) upon shut-down.

9. Process according to at least one of the preceding claims, characterised in that an outside temperature is measured and that the first differential is generated from the nominal temperature for the interior temperature and the outside temperature.

10. System for controlling the temperature of motor vehicle interiors, comprising an electric controller (R) connected on the one hand via a subtractor (S) to a nominal temperature generator (ST) and an interior temperature sensor (IT), and connected on the other hand to an output stage (E), and comprising a d.c. motor (M) which on the one hand is connected to the output stage (E) and on the other hand adjusts a final controlling element (SG) so as to influence the amount of heat supplied to the interior (I), and further comprising a position control loop, characterised in that a measuring shunt (MW) connected to frame for measuring the motor current is on the one hand connected electroconductively to a junction between the output stage (E) and the d.c. motor (M) or to the output stage (E), and on the other hand is connected electroconductively to a position signal generator (L) for generating a position signal in dependence on the rotation of the motor, and that the position signal generator (L) is connected electroconductively to the controller (R), that the position signal generator (L) incorporates a pulse former (P) and at least one counter (Z) in order to generate a countable pulse from the measured motor current for each advance of an armature segment of the d.c. motor (M), and that the counter (Z) is connected to the controller (R).

11. System according to claim 10, characterised in that the edge recognition device (O) incorporates a derivative-action element or a proportional-plus-derivative element incorporating a preset critical frequency.

12. System according to claim 10 or claim 11, characterised in that the pulse former (P) incorporates a pulse generator which produces a monopulse.

13. System according to claim 12, characterised in that the no less than one counter (Z) is an up-and-down counter.

14. System according to claim 13, characterised in that a digital-to-analogue converter (DA) is disposed in the junction between the no less than one counter (Z) and the controller (R).

15. System according to claim 14, characterised in that the no less than one counter (Z) is connected on the one hand to a first terminal (B1) of the d.c. motor (M) in a first junction between the output stage (E) and the d.c. motor (M) and on the other hand to a second terminal (B2) of the d.c. motor (M) in a second junction between the output stage (E) and the d.c. motor (M).

16. System according to claim 15, characterised in that the output stage (E) incorporates a first and a second comparator (V1, V2), that the first inputs of each comparator (V1, V2) are connected to a voltage supply terminal (U), that the second inputs of each comparator (V1, V2) are each connnected to the controller (R), that the output of the first comparator (V1) is connected electroconductively to the first terminal (B1) of the d.c. motor (M) and that the output of the second comparator (V2) is connected electroconductively to the second terminal (B2) of the d.c. motor (M).

17. System according to claim 16, characterised in that the controller (R) is on the one hand connected electroconductively to a first switching device (A1) of which the contact gap is able to connect the junction between the output of the first comparator (V1) and the first terminal (B1) to frame, and on the other hand is connected electroconductively to a second switching device (A2) of which the contact gap is able to connect the junction between the output of the second comparator (V2) and the second terminal (B2) to frame.

18. System according to claim 17, characterised in that the first switching device (A1) and the second switching device (A2) are in the form of transistors.

19. System according to claim 18, characterised in that the controller (R) is connected to a start recognition device (SE).

20. System according to at least one of the preceding claims, characterised in that the subtractor (S) is additionally connected to an outside temperature sensor (AT).

21. System according to claim 20, characterised in that a respective matching resistor (K1, K2, K3) is disposed in the junction between the setpoint generator (ST) and the subtractor (S) and/or in the junction between the interior temperature sensor (IT) and the subtractor (S) and/or in the junction between the outside temperature sensor (AT) and the subtractor (S).

22. System according to at least one of the preceding claims, characterised in that the controller (R) and/or the start recognition device (SE) and/or the counter (Z) and/or the pulse former (P) and/or the edge recognition device (O) and/or the matching resistors (K1, K2, K3) and/or the digital-to-analogue converter (DA) are part of a microcomputer.

## Revendications

1. Procédé pour réguler la température de l'habitacle de véhicules automobiles, dans lequel une température de consigne est préfixée et une température d'habitacle est mesurée, dans lequel une valeur différentielle est formée à partir de la température de consigne et de la température d'habitacle, valeur différentielle qui est appliquée à un régulateur (R), dans lequel le régulateur (R) forme à partir de la valeur différentielle une valeur de réglage envoyée à un étage final (E) pour la commande rythmée d'un moteur à courant continu (M) dans l'un ou l'autre sens de rotation, le moteur à courant continu (M) changeant la position d'un organe de réglage (SG) servant à contrôler la quantité de chaleur apportée à l'habitacle (I), et dans lequel un signal de position de l'organe de réglage (SG) est mesuré et appliqué au circuit de réglage, caractérisé en ce que le signal de position est formé par la mesure et l'exploitation des mouvements partiels du moteur à courant continu (M) sur des angles préfixés à chaque mise en marche et poursuite de la marche du moteur à courant continu (M), que le signal de position est formé par la mesure et l'exploitation du courant moteur à chaque mise en marche et chaque poursuite de la marche du moteur à courant continu (M), que l'exploitation consiste en ce que, pour chaque passage d'un segment d'induit du moteur à courant continu (M), une détection de flanc du courant moteur est effectuée, qu'une impulsion est formée pour chaque flanc correspondant au passage d'un segment d'induit et que les impulsions sont comptées et envoyées au régulateur (R).

2. Procédé selon la revendication 1, caractérisé en ce que la détection de flanc s'effectue par différentiation du courant moteur mesuré et par une détection de seuil pour une raideur de flanc préfixée.

3. Procédé selon la revendication 2, caractérisé en ce qu'une mono-impulsion est formée en cas de dépassement du seuil pour une raideur de flanc préfixée.

4. Procédé selon la revendication 3, caractérisé en ce que le comptage des impulsions s'opère en fonction du sens de rotation du moteur à courant continu (M).

5. Procédé selon la revendication 4, caractérisé en ce que, à la fin de chaque impulsion de commande du régulateur (R), s'effectuent une suppression de la marche par inertie du moteur à courant continu (M) et une suppression du comptage des impulsions.

6. Procédé selon la revendication 5, caractérisé en ce que la suppression de la marche par inertie du moteur à courant continu (M) est produite par la mise à la masse simultanée des lignes de raccordement du moteur à courant continu (M).

7. Procédé selon la revendication 6, caractérisé en ce qu'un signal de départ est appliqué au régulateur (R) à chaque mise en marche de la régulation.

8. Procédé selon la revendication 7, caractérisé en ce que, à chaque mise en marche de la régulation, l'organe de réglage (SG) est amené à la position à laquelle une quantité maximale de fluide de chauffage froid est introduite dans l'habitacle (I) et que l'organe de réglage (SG) est amené ensuite à la position que cet organe occupait à l'arrêt de la régulation.

9. Procédé selon au moins une des revendications précédentes, caractérisé en ce qu'il comprend la mesure de la température extérieure et que la première valeur différentielle est formée à partir de la température de consigne pour l'habitacle et de la température extérieure.

10. Dispositif pour réguler la température de l'habitacle de véhicules automobiles, comprenant un régulateur électrique (R) relié d'une part à travers un soustracteur (S) à un générateur de température de consigne (ST) et un capteur de température d'habitacle (IT), et d'autre part à un étage final (E), un moteur à courant continu (M) relié à l'étage final (E) et changeant la position d'un organe de réglage (SG) en vue du contrôle de la quantité de chaleur apportée à l'habitacle (I), ainsi qu'un circuit de réglage de position, caractérisé en ce qu'une résistance de mesure (MW), raccordée d'un côté à la masse et servant à mesurer le courant moteur, est connectée d'une part à une liaison entre l'étage final (E) et le moteur à courant continu (M), ou à l'étage final (E), et d'autre part à un formateur de signal de position (L) en vue de la formation d'un signal de position en fonction de la rotation du moteur, que le formateur de signal de position (L) est connecté au régulateur (R), que le formateur de signal de position (L) comporte un dispositif détecteur de flanc (O), un formateur d'impulsions (P) et au moins un compteur (Z) en vue de la formation d'une impulsion susceptible d'être comptée à partir du courant moteur mesuré pour chaque passage d'un segment d'induit du moteur à courant continu (M), et que le compteur (Z) est relié au régulateur (R).

11. Dispositif selon la revendication 10, caractérisé en ce que le dispositif détecteur de flanc (O) comporte un élément différentiel ou un élément proportionnel-différentiel présentant une fréquence limite préfixée.

12. Dispositif selon la revendication 10 ou 11, caractérisé en ce que le formateur d'impulsions (P) comporte un générateur d'impulsions générant une monoimpulsion.

13. Dispositif selon la revendication 12, caractérisé en ce qu'il comprend au moins un compteur (Z) sous la forme d'un compteur-décompteur.

14. Dispositif selon la revendication 13, caractérisé en ce qu'un convertisseur numérique/analogique (DA) est disposé dans la liaison entre le compteur (Z) ou les compteurs et le régulateur (R).

15. Dispositif selon la revendication 14, caractérisé en ce que le compteur (Z) ou les compteurs est ou sont relié(s) d'une part à une première borne (B1) du moteur à courant continu (M) située dans une première liaison entre l'étage final (E) et le moteur à courant continu (M) et, d'autre part, à une seconde borne (B2) du moteur à courant continu (M) située dans une seconde liaison entre l'étage final (E) et le moteur à courant continu (M).

16. Dispositif selon la revendication 15, caractérisé en ce que l'étage final (E) comporte un premier et un second comparateur (V1, V2), que les premières entrées des comparateurs (V1, V2) sont reliées à une borne de tension d'alimentation (U), que les secondes entrées des comparateurs (V1, V2) sont reliées chacune au régulateur (R), que la sortie du premier comparateur (V1) est connectée à la première borne (B1) du moteur à courant continu (M) et que la sortie du second comparateur (V2) est connectée à la seconde borne (B2) du moteur à courant continu (M).

17. Dispositif selon la revendication 16, caractérisé en ce que le régulateur (R) est connecté d'une part à un premier dispositif de commution (A1) dont l'intervalle de coupure peut relier à la masse la liaison entre la sortie du premier comparateur (V1) et la première borne (B1) du moteur et, d'autre part, à un second dispositif de commutation (A2) dont l'intervalle de coupure peut relier à la masse la liaison entre la sortie du second comparateur (V2) et la seconde borne (B2) du moteur.

18. Dispositif selon la revendication 17, caractérisé en ce que le premier dispositif de commutation (A1) et le second dispositif de commutation (A2) sont réalisés sous forme de transistors.

19. Dispositif selon la revendication 18, caractérisé en ce que le régulateur (R) est relié à un dispositif détecteur de départ (SE).

20. Dispositif selon au moins une des revendications précédentes, caractérisé en ce que le soustracteur (S) est relié en plus à un capteur de température extérieure (AT).

21. Dispositif selon la revendication 20, caractérisé en ce qu'une résistance d'adaptation (K1, K2, K3) est disposée dans la liaison entre le générateur de valeur de consigne (ST) et le soustracteur (S) et/ou dans la liaison entre le capteur de température d'habitacle (IT) et le soustracteur (S) et/ou dans la liaison entre le capteur de température extérieure (AT) et le soustracteur (S).

22. Dispositif selon au moins une des revendications précédentes, caractérisé en ce que le régulateur (R) et/ou le dispositif détecteur de départ (SE) et/ou le compteur (Z) et/ou le formateur d'impulsions (P) et/ou le dispositif détecteur de flanc (O) et/ou les résistances d'adaptation (K1, K2, K3) et/ou le convertisseur numérique/analogique (DA) font partie d'un microcalculateur.
